# EUROPÄISCHE PATENTSCHRIFT

(11) **EP 2 185 418 B1**
(45) Veröffentlichungstag und Bekanntmachung des Hinweises auf die Patenterteilung: **07.03.2012**
(21) Anmeldenummer: 08801814.8
(22) Anmeldetag: 03.09.2008
(51) Int. Cl.: B65B 3/16, B65B 3/28, B65B 57/14

(54) **VERFAHREN UND VORRICHTUNG ZUM BEFÜLLEN VON TUBEN IN EINER TUBENFÜLLMASCHINE**
METHOD AND APPARATUS FOR FILLING TUBES IN A TUBE FILLING MACHINE
PROCEDE ET DISPOSITIF DE REMPLISSAGE DE TUBES DANS UNE MACHINE DE REMPLISSAGE DE TUBES

(30) Priorität: 06.09.2007 DE 102007042433
(43) Veröffentlichungstag der Anmeldung: 19.05.2010
(73) Patentinhaber: IWK Verpackungstechnik GmbH, 76297 Stutensee (DE)
(72) Erfinder: KLAUS, Horst, 76297 Stutensee (DE); KIRSTEN, Matthias, 76344 Eggenstein-Leopoldshafen (DE)
(74) Vertreter: Lasch, Hartmut
(86) Internationale Anmeldenummer: PCT/EP2008/007181
(87) Internationale Veröffentlichungsnummer: WO 2009/033595

(56) Entgegenhaltungen:
- WO-A-90/15755
- DE-A1-102006 060 834
- GB-A- 2 017 971
- US-A- 4 676 282

## Beschreibung

Die Erfindung betrifft ein Verfahren zum Befüllen von Tuben in einer Tubenfüllmaschine, wobei die Tuben einer Füllstation der Tubenfüllmaschine zugeführt werden und in der Füllstation ein flüssiges oder pastöses Produkt mittels einer Füllvorrichtung in die Tuben eingefüllt wird und wobei jede Tube nach dem Befüllen gewogen und das IST-Gewicht mit einem SOLL-Gewicht verglichen wird, wobei die Fülleinrichtung verstellt wird, wenn die Abweichung zwischen dem IST-Gewicht und dem SOLL-Gewicht außerhalb vorgegebener Grenzen liegt.

Darüber hinaus betrifft die Erfindung eine Vorrichtung zum Befüllen von Tuben in einer Tubenfüllmaschine, mit einer Füllstation, in der ein flüssiges oder pastöses Produkt mittels einer Füllvorrichtung in die Tuben einfüllbar ist.

Eine Tubenfüllmaschine üblichen Aufbaus weist eine endlos umlaufende Fördervorrichtung auf, die eine Vielzahl von Aufnahmen besitzt, in die jeweils ein Tubenhalter eingesetzt ist. Jeder Tubenhalter kann eine Tube mit ihrem Kopf-oder Kappenabschnitt aufnehmen, wobei jede Tube zusammen mit dem Tubenhalter die einzelnen Arbeitsstationen der Tubenfüllmaschine durchläuft. In einer Füllstation wird ein Produkt, bei dem es sich üblicherweise um ein flüssiges oder pastöses Produkt handelt, mittels einer Füllvorrichtung in die nach oben offene Tube eingefüllt, woraufhin die Tube in einer nachgeschalteten Verschlussstation an ihrem oberen Ende verschlossen, beispielsweise verschweißt und anschließend aus der Tubenfüllmaschine abgeführt wird.

Die Menge des einzufüllenden Produktes wird üblicherweise volumetrisch dosiert, d.h. das abzufüllende Volumen des Produktes wird mittels eines Dosierkolbens aus einem Vorratsbehälter angesaugt und anschließend in die Tube hineingedrückt. Das Füllvolumen ist somit durch den Durchmesser des Dosierkolbens und dessen Hub definiert. In der Praxis hat es sich jedoch gezeigt, dass diese volumetrische Dosierung Nachteile hat. Insbesondere kann es in dem Füllvolumen des Produktes zu Lufteinschlüssen kommen, was zur Folge hat, dass eine zu geringe Menge des Produktes in die Tube abgefüllt wird. Darüber hinaus unterliegt das Füllvolumen Schwankungen infolge der Umweltbedingungen und der Zusammensetzung des Produktes.

Der Abfüller des Produktes bzw. der Hersteller der gefüllten Tuben muss dem Kunden garantieren, dass das in einer Tube befindliche Produkt ein Mindestgewicht aufweist. Aus diesem Grunde wird das Gewicht der gefüllten Tuben überprüft. Nachdem die Tuben an ihrem oberen bzw. hinteren Ende verschlossen wurden und die Tubenfüllmaschine an einer Entnahmestation verlassen haben, laufen sie über eine Bandwaage, in der das Gewicht jeder Tube ermittelt wird. Diejenigen Tuben, die ein vorgegebenes SOLL-Gewicht nicht erreichen, werden als sogenannte "Schlecht-Tuben" ausgeschieden und können nicht weiterverwendet werden. Um den Anteil an "Schlecht-Tuben" möglichst gering zu halten, ist es bekannt, die Tuben mit einem Volumen zu füllen, dass über dem SOLL-Volumen liegt. Damit ist jedoch der Nachteil verbunden, dass eine übermäßig große Menge des Produktes abgefüllt ist, was unwirtschaftlich ist. Nachdem eine ausreichen große Anzahl von üblicherweise 100 Tuben gewogen ist, wird aus den Messwerten ein Mittelwert errechnet, auf dessen Grundlage der Dosierzylinder der Füllstation verstellt wird. Nachteilig dabei ist, dass bereits eine relativ große Anzahl von Tuben fehlerhaft gefüllt sein kann, bevor die Einstellung der Füllstation korrigiert wird. Dies führt dazu, dass relativ viele Tuben ungenau gefüllt sind und aus dem weiteren Produktionsprozess herausgenommen werden müssen.

Aus der GB 1,012,072 ist es bekannt, den Füllvorgang einer Tube nach dem Gewicht zu steuern. Die Tube befindet sich dabei während des Füllvorgangs auf einer Wiegevorrichtung und das Produkt wird solange eingefüllt, bis mittels der Wiegevorrichtung das Erreichen des SOLL-Gewichts festgestellt und daraufhin die Produktzufuhr in die Tube unterbrochen wird. Um auf diese Weise die Tube mit hoher Präzision zu füllen, benötigt dieses Vorgehen jedoch relativ viel Zeit, d.h. der Füllvorgang erfolgt relativ langsam, was die Effektivität der Tubenfüllmaschine verringert.

Der Erfindung liegt die Aufgabe zugrunde, ein Verfahren zum Befüllen von Tuben in einer Tubenfüllmaschine zu schaffen, mit dem die Tuben schnell und mit hoher-Genauigkeit befüllt werden können. Darüber hinaus solle eine Vorrichtung zum Befüllen von Tuben in einer Tubenfüllmaschine geschaffen werden, mit der sich das Verfahren in einfacher Weise durchführen lässt.

Hinsichtlich des Verfahrens wird die vorgenannte Aufgabe durch die Merkmale des Anspruchs 1 gelöst. Dabei ist vorgesehen, dass jede Tube nach dem Befüllen bereits in der Tubenfüllmaschine in der Füllstation oder zwischen der Füllstation und einer Auswurfstation für Schlecht-Tuben und innerhalb eines relativ kurzen Zeitraums von max. 5 sec. nach dem Füllen gewogen wird und dass das IST-Gewicht mit einem SOLL-Gewicht verglichen wird. Wenn die Abweichung zwischen dem IST-Gewicht und dem SOLL-Gewicht außerhalb vorgegebener Grenzen liegt, wird die Füllvorrichtung angesteuert und verstellt, so dass das IST-Gewicht für die nachfolgenden Tuben näher an dem SOLL-Gewicht liegt.

Erfindungsgemäß wird von dem Grundgedanken ausgegangen, das Gewicht der befüllten Tube bereits in der Tubenfüllmaschine, jedoch erst stromab der Füllstation zu überprüfen und überwachen. Wenn das festgestellte IST-Gewicht innerhalb der vorgegebenen Grenzen von beispielsweise von ± 1% relativ zum SOLL-Gewicht liegt, ist die Tube ordnungsemäß gefüllt, so dass eine Verstellung der Füllvorrichtung nicht notwendig ist. Es ist deshalb vorzugsweise vorgesehen, dass die Einstellung der Füllvorrichtung unverändert bleibt, wenn die Abweichung zwischen dem IST-Gewicht und dem SOLL-Gewicht innerhalb der vorgegebenen Grenzen liegt. Die Grenzwerte für die akzeptable Abweichung zwischen dem IST-Gewicht und dem SOLL-Gewicht können vorzugweise von dem Betreiber der Tubenfüllmaschine verändert und in gewünschter Weise eingestellt werden, so dass die Tubenfüllmaschine sowohl an die Art als auch an die Füllmenge des abzufüllenden Produktes angepasst werden kann.

Das Wiegen der Tuben erfolgt innerhalb eines relativ kurzen Zeitraums nach Beendigung des Füllvorgangs von maximal 5 sec., vorzugsweise innerhalb von 3 sec. und besonders bevorzugt bereits innerhalb von 2 sec. nach Beendigung des Füllvorgangs. Durch das Wiegen der Tuben kurz nach dem Füllvorgang ist ein unmittelbarer Regelkreis gegeben. Im Idealfall wird eine Tube in oder unmittelbar nach der Füllstation gewogen, dann wird ein Korrekturwert ermittelt und dieser wird direkt auf die Fülleinheit gegeben, so dass diese bereits bei dem Füllvorgang der nächsten Tube entsprechend angepasst werden kann. Dies ist jedoch in der Praxis kaum zu erreichen, da das Wiegen einer Tube und das Füllen der nächsten Tube weitestgehend parallel verlaufen.

Aus diesem Grunde kann der Korrekturwert deshalb frühestens bei der übernächsten Tube wirksam werden.

In einer möglichen Ausgestaltung der Erfindung kann vorgesehen sein, dass bei jeder Abweichung des IST-Gewichts einer Tube von dem SOLL-Gewicht ein entsprechender Korrekturwert errechnet und die Füllvorrichtung entsprechend verstellt wird. Um zu verhindern, dass die Füllvorrichtung durch übermäßig häufige Verstellbewegungen einem hohen Verschleiß unterliegt, kann in Weiterbildung der Erfindung vorgesehen sein, dass aus dem Gewicht der nachfolgenden n Tuben ein mittlerer Korrekturwert ermittelt wird, auf dessen Grundlage die Fällvorrichtung verstellt wird, wenn eine Abweichung zwischen dem IST-Gewicht und dem SOLL-Gewicht außerhalb der vorgegebenen Grenzen festgestellt wird. Dabei beträgt die Anzahl n der nachfolgenden Tuben, deren Gewicht in den mittleren Korrekturwert eingeht, vorzugsweise 2 bis 10 und insbesondere 2 bis 5.

Erfindungsgemäß ist vorgesehen, dass das Wiegen der Tuben in der Tubenfüllmaschine vor einer Auswurfstation für Schlecht-Tuben erfolgt. Diejenigen Tuben, deren Gewicht unterhalb des vorgegebenen unteren Grenzwertes liegt, werden als Schlecht-Tuben erkannt und aus dem weiteren Verpackungsprozess herausgenommen.

Der Füllstation ist üblicherweise eine Verschlussstation nachgeschaltet, in der die Tuben verschlossen werden. Vorzugsweise erfolgt das Wiegen der Tuben stromab der Verschlussstation, d.h. es werden die bereits verschlossenen Tuben gewogen.

Bei dem IST-Gewicht, das mit dem vorgegebenen Soll-Gewichts verglichen wird, kann es sich in einer möglichen Ausgestaltung der Erfindung um das Gewicht der gefüllten Tube, d.h. um das Gewicht des eingefüllten Produktes und das Gewicht der Tube (Tara) handeln. Üblicherweise sitzt die Tube in einem Tubenhalter, wenn sie die einzelnen Arbeitsstationen der Tubenfüllmaschine durchläuft. In einer möglichen Ausgestaltung kann vorgesehen sein, dass die gefüllte Tube zusammen mit dem sie haltenden Tubenhalter gewogen wird. Dabei kann das Gewicht des Tubenhalters in einer maschineninternen Datenbank gespeichert sein und wird von dem ermittelten IST-Gewicht abgezogen, so dass sich auf diese Weise das Gewicht der gefüllten Tube ergibt. Um das Gewicht der einzelnen Tubenhalter zu ermitteln, kann zu Beginn des Betriebs der Tubenfüllmaschine eine Gewichtsermittlung jedes Tubenhalters durchgeführt werden, wobei die einzelnen Gewichtswerte abgespeichert werden und sich dem entsprechenden Tubenhalter eindeutig zuordnen lassen.

Alternativ ist es auch möglich, die gefüllte Tube für den Wiegevorgang aus dem Tubenhalter herauszuheben und somit nur das Gewicht der gefüllten Tube zu ermitteln. Anschlie-βend wird die Tube wieder in den Tubenhalter eingesetzt.

Es hat sich in der Praxis gezeigt, dass auch das Gewicht der leeren Tuben relativ großen Schwankungen unterliegt, insbesondere wenn die leeren Tuben von unterschiedlichen Herstellern zugeliefert werden. Um die Präzision des Füllvorgangs zu erhöhen, kann deshalb in einer Weiterbildung des erfindungsgemäßen Verfahrens vorgesehen sein, nicht das IST-Gewicht der gefüllten Tube, sondern das IST-Gewicht des eingefüllten Produktes mit einem SOLL-Gewicht zu vergleichen. Zu diesem Zweck wird zunächst in genannter Weise das Gewicht der gefüllten Tube, d.h. das Gewicht des Produktes und der Tube, ermittelt. Zusätzlich wird vor dem Füllvorgang das Gewicht der leeren Tube ermittelt und von dem nachfolgend ermittelten Gewicht der gefüllten Tube abgezogen. Auf diese Weise ergibt sich das Gewicht des eingefüllten Produktes, das das IST-Gewicht für den oben genannten Vergleich mit einem vorgegebenen SOLL-Gewicht darstellt. Hinsichtlich der Vorrichtung wird die oben genannte Aufgabe dadurch gelöst, dass innerhalb der Tubenfüllmaschine in oder stromab der Füllstation eine Wiegestation zur Ermittlung des Gewichts der gefüllten Tube angeordnet ist und dass eine Steuervorrichtung vorgesehen ist, die von der Wiegestation ein Gewichtssignal erhält und die nach Auswertung des Gewichtssignals die Füllvorrichtung steuert. Dabei kann stromauf der Füllstation eine Leertuben-Wiegestation angeordnet sein, die ein Leertuben-Gewichtssignal an die Steuervorrichtung abgibt, so dass die Steuervorrichtung aus dem Gewicht der gefüllten Tube und dem Gewicht der leeren Tube das Gewicht des tatsächlich eingefüllten Produktes ermitteln kann.

Vorzugsweise ist stromab der Wiegestation und insbesondere auch stromab der Verschlussstation eine Auswurfstation für Schlecht-Tuben vorgesehen.

Besondere vorteilhafte Bedeutung haben das beschriebene Verfahren und die Vorrichtung, wenn die Tuben mit einem bisher unbekannten Produkt oder mit einem bisher nicht verwendeten Füllgewicht gefüllt werden sollen. Die Erreichung des gewünschten Füllgewichtes kann ohne manuelle Einstellung des Hubes der Füll- oder Dosiereinrichtung erfolgen, sondern die Füll- oder Dosiereinrichtung stellt sich automatisch in wenigen Iterationsschritten auf das gewünschte Füllgewicht ein, indem jede Tube nach der Füllung gewogen und die Füll- oder Dosiereinrichtung zur Erreichung des Soll-Gewichtes verstellt wird, bis die Tuben das gewünschte Füllgewicht erreicht haben.

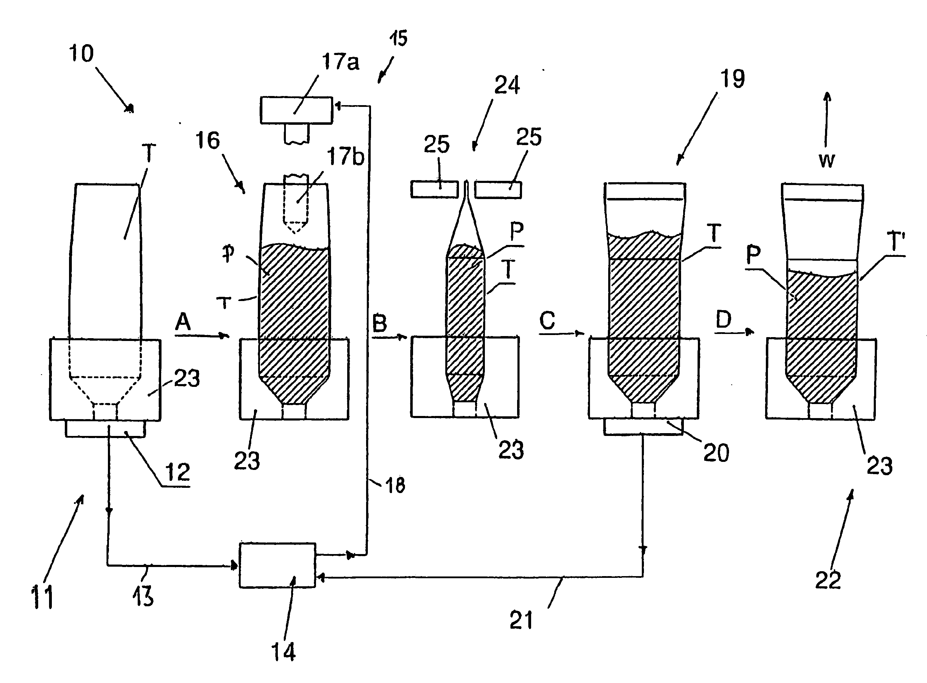

Weitere Einzelheiten und Merkmale der Erfindung sind aus der folgenden Beschreibung eines Ausführungsbeispiels unter Bezugnahme auf die Zeichnung ersichtlich. Dabei zeigt die einzige Figur eine schematische Darstellung von Tuben beim Durchlaufen der einzelnen Arbeitsstationen einer Tubenfüllmaschine.

Die Figur zeigt einzelne Arbeitsstationen einer Tubenfüllmaschine 10, die von einer Tube T, die mit ihrem unteren Kopf- oder Kappenabschnitt in einem Tubenhalter 23 gehalten ist, nacheinander durchlaufen werden. Weitere Arbeitsstationen der Tubenfüllmaschine sind aus Gründen der Übersichtlichkeit weggelassen.

In einer Leertuben-Wiegestation 11 wird die leere Tube T zusammen mit ihrem Tubenhalter 23 mittels einer Leertuben-Wiegevorrichtung 12 gewogen. Die Leertuben-Wiegevorrichtung 12 gibt über eine Leitung 13 ein Leertuben-Gewichtssignal, das im dargestellten Fall das Gewicht der leeren Tube T einschließlich des Gewichts ihres Tubenhalters 23 umfasst, an eine Steuervorrichtung 14.

Alternativ ist es jedoch auch möglich, die leere Tube T zum Wiegen aus ihrem Tubenhalter 23 herauszuheben, so dass dann an die Steuervorrichtung 14 nur das Gewicht der leeren Tube übermittelt wird.

Die leere Tube T wird nach dem Wiegen einer Füllstation 15 zugeführt, wie es durch den Pfeil A angedeutet ist. Die Füllstation 15 umfasst eine Füllvorrichtung 16 mit einer in die Tube T eintauchenden Fülldüse 17b und einer Dosiervorrichtung 17a, mit der die Menge eines in die Tube T einzufüllenden Produktes P einstellbar ist. Die Steuervorrichtung 14 kann über eine Leitung 18 auf die Dosiervorrichtung 17a einwirken und diese verstellen, so dass die Menge des Produktes P, die bei einem Füllvorgang in die Tube T eingefüllt wird, während des Betriebes der Tubenfüllmaschine verändert werden kann.

Nach dem Füllvorgang wird die im Tubenhalter 23 gehaltene Tube T, die nunmehr mit dem Produkt P gefüllt, jedoch an ihrem oberen Ende noch offen ist, einer Verschlussstation 24 zugeführt, wie es durch den Pfeil B angedeutet ist. In der Verschlussstation 24 wird das obere, offene Ende der Tube T verschlossen. Im dargestellten Beispiel besteht die Tube T aus Kunststoff und die Verschlussstation 24 umfasst zwei Schweißbacken 25, die das obere Ende der Tube T unter Zuführung von Wärmeenergie zusammendrücken, so dass eine im wesentlichen quer zur Längsachse der Tube T verlaufende Schweißnaht ausgebildet wird, durch die die Tube T verschlossen ist.

Nach dem Verschließen der Tube T gelangt diese zusammen mit ihrem Tubenhalter 23 in eine Wiegestation 19, was durch den Pfeil C angedeutet ist. In der Wiegestation 19 wird das Gewicht der befüllten Tube T zusammen mit ihrem Tubenhalter 23 mittels einer Wiegevorrichtung 20 ermittelt. Die Wiegevorrichtung 20 gibt über eine Leitung 21 ein entsprechendes Wiegesignal an die Steuervorrichtung 14. Aus dem Signal der Wiegevorrichtung 20, das das Gewicht der befüllten Tube einschließlich ihres Tubenhalters 23 angibt, und aus dem Signal der Leertuben-Wiegevorrichtung 12, das das Signal der leeren Tube T und des Tubenhalters 23 angibt, lässt sich durch Subtraktion das Gewicht des in die Tube eingefüllten Produktes P ermitteln. Dieses IST-Gewicht des eingefüllten Produktes wird mit einem SOLL-Gewicht verglichen. Wenn die Abweichung zwischen dem IST-Gewicht und dem SOLL-Gewicht nur relativ gering ist und innerhalb vorgegebener Grenzen liegt, wird die Tube T als ordnungsgemäß gefüllt klassifiziert und die Steuervorrichtung 14 nimmt keine Verstellung an der Dosiervorrichtung 17a der Füllvorrichtung 16 vor.

Wenn der Vergleich zwischen dem IST-Gewicht und dem SOLL-Gewicht eine übermäßige Abweichung feststellt, wird die Tube als Schlecht-Tube klassifiziert und es werden die Gewichtswerte der nächsten 2 bis 10 und vorzugsweise der nächsten 2 bis 5 Tuben überprüft und aus den dabei vorhandenen Abweichungen eine mittlere Abweichung ermittelt. Die Steuervorrichtung 14 gibt einen entsprechenden Korrekturwert an die flosiervorrichtung 17a und verstellt diese entsprechend.

Statt die befüllte Tube T in der Wiegestation 19 zusammen mit dem Tubenhalter 23 zu wiegen, ist es auch möglich, die Tube T für den Wiegevorgang aus dem Tubenhalter 23 herauszuheben. Wenn die Tube T sowohl in der Leertuben-Wiegestation 11 als auch in der Wiegestation 19 jeweils ohne Tubenhalter 23 gewogen wird, lässt sich das Gewicht des in die Tube abgefüllten Produktes P in vorgenannter Weise durch Subtraktion der beiden Wiegesignale ermitteln.

Es ist auch möglich, das Gewicht aller Tubenhalter 23 der Tubenfüllmaschine vor Beginn des Füllvorgangs mit einem sogenannten Teach-in-Verfahren zu ermitteln und in einer entsprechenden Datenbank abzulegen, so dass das Gewicht jedes einzelnen Tubenhalters bei Bedarf aus einem entsprechenden Wiegesignal herausgerechnet werden kann.

Nach dem Wiegevorgang in der Wiegestation 19 gelangt die befüllte Tube T in eine nachgeschaltete Auswurfstation 22, wie es durch den Pfeil D angedeutet ist. In der Auswurfstation 22 werden Schlecht-Tuben T, die unzureichend gefüllt sind, aus dem weitren Verfahrensprozess herausgenommen, wie es durch den Pfeil W angedeutet ist.

## Patentansprüche

1. Verfahren zum Befüllen von Tuben (T) in einer Tubenfüllmaschine, wobei die Tuben (T) einer Füllstation (15) der Tubenfüllmaschine zugeführt werden und in der Füllstation (15) ein flüssiges oder pastöses Produkt (P) mittels einer Füllvorrichtung (16) in die Tuben (T) eingefüllt wird und wobei jede Tube (T) nach dem Befüllen gewogen und das IST-Gewicht mit einem SOLL-Gewicht verglichen wird, wobei die Füllvorrichtung (16) verstellt wird, wenn die Abweichung zwischen dem IST-Gewicht und dem SOLL-Gewicht außerhalb vorgegebener Grenzen liegt, **dadurch gekennzeichnet, dass** das Wiegen der Tuben (T) in der Tubenfüllmaschine in der Füllstation (15) oder zwischen der Füllstation (15) und einer Auswurfstation (22) für Schlecht-Tuben (T') innerhalb von 5 sec. nach Beendigung des Füllvorgangs erfolgt.

2. Verfahren nach Anspruch 1, **dadurch gekennzeichnet, dass** das Wiegen der Tuben (T) innerhalb von 3 sec. nach Beendigung des Füllvorgangs erfolgt.

3. Verfahren nach Anspruch 2, **dadurch gekennzeichnet, dass** das Wiegen der Tuben (T) innerhalb von 2 sec. nach Beendigung des Füllvorgangs erfolgt.

4. Verfahren nach einem der Ansprüche 1 bis 3, **dadurch gekennzeichnet, dass** die Einstellung der Füllvorrichtung (16) unverändert bleibt, wenn die Abweichung zwischen dem IST-Gewicht und dem SOLL-Gewicht innerhalb der vorgegebenen Grenzen liegt.

5. Verfahren nach einem der Ansprüche 1 bis 4, **dadurch gekennzeichnet, dass** bei einer Abweichung zwischen dem IST-Gewicht und dem SOLL-Gewicht außerhalb der vorgegebenen Grenzen aus dem Gewicht der nachfolgenden n Tuben ein mittlerer Korrekturwert ermittelt wird, auf dessen Grundlage die Füllvorrichtung (16) verstellt wird.

6. Verfahren nach Anspruch 5, **dadurch gekennzeichnet, dass** die Anzahl n=2 bis 10 ist.

7. Verfahren nach Anspruch 6, **dadurch gekennzeichnet, dass** die Anzahl n=2 bis 5 ist.

8. Verfahren nach einem der Ansprüche 1 bis 7, **dadurch gekennzeichnet, dass** die gefüllte Tube (T) in einem Tubenhalter (23) sitzt und zusammen mit diesem gewogen wird und dass das Gewicht des Tubenhalters (23) gespeichert ist und von dem ermittelten Gewicht abgezogen wird.

9. Verfahren nach einem der Ansprüche 1 bis 7, **dadurch gekennzeichnet, dass** die gefüllte Tube (T) in einem Tubenhalter (23) sitzt und für den Wiegevorgang aus diesem herausgehoben wird.

10. Verfahren nach einem der Ansprüche 1 bis 9, **dadurch gekennzeichnet, dass** das Gewicht der leeren Tube (T) vor dem Füllvorgang ermittelt und von dem nachfolgend ermittelten Gewicht der gefüllten Tube (T) abgezogen wird.

11. Vorrichtung zum Befüllen von Tuben (T) in einer Tubenfüllmaschine, mit einer Füllstation (15), in der ein flüssiges oder pastöses Produkt (P) mittels einer Füllvorrichtung (16) in die Tuben (T) einfüllbar ist, **dadurch gekennzeichnet, dass** innerhalb der Tubenfüllmaschine in oder stromab der Füllstation (15) eine Wiegestation (19) zur Ermittlung des Gewichts der gefüllten Tube (T) angeordnet ist und dass eine Steuervorrichtung (14) vorgesehen ist, die von der Wiegestation (19) ein Gewichtssignal erhält und die nach Auswertung des Gewichtssignals die Füllvorrichtung (16) steuert.

12. Vorrichtung nach Anspruch 11, **dadurch gekennzeichnet, dass** stromauf der Füllstation (16) eine Leertuben-Wiegestation (11) angeordnet ist, die ein Leertuben-Gewichtssignal an die Steuervorrichtung (14) abgibt.

13. Vorrichtung nach Anspruch 11 oder 12, **dadurch gekennzeichnet, dass** stromab der Wiegestation (19) eine Auswurfstation (22) für Schlecht-Tuben (T') angeordnet ist

## Claims

1. Method for filling tubes (T) in a tube-filling machine, wherein the tubes (T) are directed to a filling station (15) of the tube-filling machine and, in the filling station (15), a liquid or highly viscous product (P) is poured into the tubes (T) by means of a filling apparatus (16), wherein each tube (T) is weighed after being filled, the actual weight being compared with a desired weight, wherein the filling apparatus (16) is adjusted if the variance between the actual weight and the desired weight lies outside predetermined limits, **characterized in that** the weighing of the tubes (T) in the tube-filling machine, in the filling station (15) or between the filling station (15) and an ejection station (22) for bad tubes (T'), occurs no later than 5 sec. after the end of the filling operation.

2. Method according to claim 1, **characterized in that** the weighing of the tubes (T) occurs no later than 3 sec. after the end of the filling operation.

3. Method according to claim 2, **characterized in that** the weighing of the tubes (T) occurs no later than 2 sec. after the end of the filling operation.

4. Method according to any one of the claims 1 to 3, **characterized in that** the setting of the filling apparatus (16) remains unchanged if the variance between the actual weight and the desired weight lies within predetermined limits.

5. Method according to any one of the claims 1 to 4, **characterized in that** if the variance between the actual weight and the desired weight lies outside predetermined limits, an average correction value is determined from the weight of the next n tubes, on the basis of which the filling apparatus (16) is adjusted.

6. Method according to the claim 5, **characterized in that** the number n=2 to 10.

7. Method according to claim 6, **characterized in that** the number n=2 to 5.

8. Method according to any one of the claims 1 to 7, **characterized in that** the filled tube (T) is located in a tube holder (23) and is weighed together with the latter and that the weight of the tube holder (23) is stored and subtracted from the derived weight.

9. Method according to any one of the claims 1 to 7, **characterized in that** the filled tube (T) is located in a tube holder (23) and is lifted out of the latter for the weighing process.

10. Method according to any one of the claims 1 to 9, **characterized in that** the weight of the empty tube (T) is determined before the filling operation and is subtracted from the subsequently determined weight of the filled tube (T).

11. Apparatus for filling tubes (T) in a tube-filling machine, with a filling station (15) in which a liquid or highly viscous product (P) can be poured into the tubes (T) with a filling apparatus (16), **characterized in that** a weighing station (19) for determining the weight of the filled tube (T) is disposed inside the tube-filling machine in or downstream from the filling station (15), and a control apparatus (14) is provided that receives a weight signal from the weighing station (19) and controls the filling apparatus (16) after having evaluated the weight signal.

12. Apparatus according to the claim 11, **characterized in that** an empty tube weighing station (11) is disposed upstream of the filling station (16), which conveys an empty tube weight signal to the control apparatus (14).

13. Apparatus according to either of the claims 11 or 12, **characterized in that** an ejection station (22) for bad tubes (T') is disposed downstream of the weighing station (19).

## Revendications

1. Procédé de remplissage de tubes (T) dans une machine de remplissage de tubes, les tubes (T) étant amenés à une station de remplissage (15) de la machine de remplissage de tubes et remplis dans la station de remplissage (15) d'un produit (P) fluide ou pâteux à l'aide d'un dispositif de remplissage (16) placé dans les tubes (T) et chaque tube (T) étant pesé après le remplissage et le poids réel étant comparé à un poids théorique, le dispositif de remplissage (16) étant réglé lorsque l'écart entre le poids réel et le poids théorique se situe à l'extérieur de limites prédéfinies, **caractérisé en ce que** la pesée des tubes (T) se produit sous 5 secondes à la fin du processus de remplissage, dans la machine de remplissage de tubes prévue dans la station de remplissage (15) ou entre la station de remplissage (15) et une station d'éjection (22) des mauvais tubes (T').

2. Procédé selon la revendication 1, **caractérisé en ce que** la pesée des tubes (T) se produit sous 3 secondes à la fin du processus de remplissage.

3. Procédé selon la revendication 2, **caractérisé en ce que** la pesée des tubes (T) se produit sous 2 secondes à la fin du processus de remplissage.

4. Procédé selon l'une quelconque des revendications 1 à 3, **caractérisé en ce que** le réglage du dispositif de remplissage (16) reste inchangé lorsque l'écart entre le poids réel et le poids théorique se situe à l'intérieur de limites prédéfinies.

5. Procédé selon l'une quelconque des revendications 1 à 4, **caractérisé en ce qu'**en présence d'un écart entre le poids réel et le poids théorique sortant des limites prédéfinies, une valeur de correction moyenne est calculée à partir du poids des n tubes suivants, cette valeur servant de base au réglage du dispositif de remplissage (16).

6. Procédé selon la revendication 5, **caractérisé en ce que** le nombre n est compris entre 2 et 10.

7. Procédé selon la revendication 6, **caractérisé en ce que** le nombre n est compris entre 2 et 5.

8. Procédé selon l'une quelconque des revendications 1 à 7, **caractérisé en ce que** le tube (T) rempli repose dans un élément porte-tube (23) et est pesé conjointement avec lui et que le poids de l'élément porte-tubes (23) est mémorisé et ôté du poids calculé.

9. Procédé selon l'une quelconque des revendications 1 à 7, **caractérisé en ce que** le tube (T) rempli repose dans un élément porte-tube (23) et en est retiré pour le processus de pesée.

10. Procédé selon l'une quelconque des revendications 1 à 9, **caractérisé en ce que** le poids du tube (T) vide est calculé avant le processus de remplissage et ôté par la suite au poids calculé du tube (T) rempli.

11. Dispositif de remplissage de tubes (T) dans une machine de remplissage de tubes équipée d'une station de remplissage (15) dans laquelle un produit (P) fluide ou pâteux peut être amené dans les tubes (T) à l'aide d'un dispositif de remplissage (16), **caractérisé en ce qu'**une station de pesée (19) est disposée à l'intérieur de la machine de remplissage de tubes, à l'intérieur ou en aval de la station de remplissage (15), pour calculer le poids du tube (T) rempli et qu'un dispositif de commande (14) est prévu, celui-ci recevant un signal de poids provenant de la station de pesée (19) et commandant le dispositif de remplissage (16) après analyse du signal de poids.

12. Dispositif selon la revendication 11, **caractérisé en ce qu'**une station de pesée de tubes vides (11) est disposée en amont de la station de remplissage (16), ladite station de pesée envoyant un signal de poids de tubes vides au dispositif de commande ( 14).

13. Dispositif selon la revendication 11 ou 12, **caractérisé en ce qu'**une station d'éjection (22) des mauvais tubes (T') est disposée en aval de la station de pesée (19).
